# EUROPEAN PATENT APPLICATION

(11) **EP 4 011 191 A1**
(43) Date of publication of application: **15.06.2022**
(21) Application number: 21202644.7
(22) Date of filing: 14.10.2021
(51) Int. Cl.: A01D 43/10

(54) **COMPRESSION ROLL HOUSING**

(30) Priority: 09.12.2020 GB 202019371
(71) Applicant: AGCO International GmbH, 8212 Neuhausen am Rheinfall (CH)
(72) Inventor: DREER, Constantin, 87616 Marktoberdorf (DE)
(74) Representative: AGCO Intellectual Property Department

(57) **Abstract**

A compression roll housing for an agricultural machine is described, in which the housing has a side panel provided with at least one elongated aperture for receiving a shaft. The aperture allows movement of the shaft within the aperture along its longitudinal axis. The at least one elongated aperture is provided with a flexible cover member having a cover aperture. The flexible cover member prevents the escape of any processed crop material from the housing, while permitting movement of the shaft received in the elongated aperture.

## Description

### FIELD OF THE INVENTION

This invention relates to a roll housing for an agricultural machine. More specifically, it relates to a compression roll housing for a forage harvester.

### BACKGROUND

A forage harvester has a front attachment which includes a front cutter and a mechanism for feeding the cut crop to compression rollers where it is compressed. The compressed crop is then cut by cutters before being fed into a discharge chute.

The compression rollers which comprise a drum and a shaft are contained within a compression roll housing. Typically, three sets of rollers are arranged in pairs, each set having an upper and lower roller so that the crop is fed and compressed between each set. The housing comprises apertures so that the rollers can be mounted within the housing with the shafts protruding through the apertures. The rollers must be mounted so that the distance between the upper and lower rollers can be altered in order to facilitate cleaning and repairs and to allow the compression thickness to be altered. Typically, the shafts of the upper set of rollers are mounted within longitudinal apertures which extend generally vertically on the sides of the housing. Furthermore, the set of compression rollers must be connected to the drive system of the forage harvester. This can be provided by a transmission which connects the shafts of the compression rollers to a transmission input shaft to a cardan driveline of the drive system. The transmission input shaft may also protrude through apertures in the housing as the roller transmission moves with the rollers. When the input shaft is secured at a desired location, it is possible that processed crop material in the housing may escape, which in turn reduces the yield of compressed, cut crop and can cause damage or blocking to occur in other parts of the forage harvester.

EP 0 541 975 B1 discloses the use of sliders to seal, or cover roll housing apertures. The sliders are mounted within guides provided on the housing and are pivotally connected so that the sliders are vertically moveable over the aperture when there is movement of the shaft within the aperture.

As mentioned in EP 0 541 975 B1 sliders tend to cant which restricts movement. EP 0 541 975 B1 tries to overcome this problem by fitting the sliders into guides to avoid canting. Even if canting during movement is avoided by reducing the slackness between the guides and sliders, the uncovered guides are likely to be soiled by dust or crop from the housing which may restrict movement of the sliders. In addition, the design shown in EP 0 541 975 B1 requires a precise multi part design which is expensive. An alternative means for sealing a slot is the use of bristles extending from one side of a slot toward the other, as described in US 6 786 110 B1.

The object of this invention is to provide an alternative sealing means for sealing a roll housing aperture, in particular to prevent processed crop escaping from the housing whilst permitting movement of the shaft within the aperture.

According to a first aspect of the invention, a compression roll housing for an agricultural machine is disclosed, in which the housing comprises first and second side walls, a driveline extending between the side walls of the housing, one of the first and second walls having a side wall aperture, the driveline including an input shaft extending from within the roll housing through the side wall aperture to a transmission housing mounted externally of the side wall, said side wall aperture allowing for vertical movement of the input shaft within the side wall aperture, characterised in that the side wall aperture is provided with a flexible cover member having a cover aperture through which the input shaft extends.

According to a second aspect of the invention, a compression roll housing for an agricultural machine is disclosed in which the housing comprises first and second side walls, each side wall being provided with at least one elongated aperture for receiving a roller shaft of a compression roll, said side wall aperture allowing for vertical movement of the roller shaft within the side wall aperture, characterised in that the side wall aperture is provided with a flexible cover member having a cover aperture through which the roller shaft extends.

In each aspect, the flexible cover member is adapted to prevent the escape of processed crop material from the housing, while permitting movement of the shaft received in the side wall aperture.

In either aspect, preferably the flexible cover member comprises a tubular member having a first end and a second end, in which the first end is secured to the housing and the cover aperture is provided at the second end.

More preferably, the first end of the flexible cover member is secured to the side wall of the housing having the side wall aperture.

Preferably, the tubular member comprises a plurality of segments. More preferably, the plurality of segments are folded with respect to one another.

Preferably, the plurality of segments are concentrically located with respect to the cover aperture.

Preferably the plurality of segments are located concentrically with respect to the first end of the flexible cover member.

In either aspect, preferably the flexible cover member is located in position by a wear plate having an inner peripheral edge. Still more preferably, the wear plate is provided with a one or more depressions. Preferably, the or each depression is provided with one or more openings and that a peripheral portion of the side wall aperture is provided with a plurality of corresponding openings.

Preferably, a periphery of the cover aperture is provided with a U-shaped profile. More preferably, a limb of the U-shaped profile is located in position between a periphery of the side wall aperture and the inner peripheral edge of the wear plate.

Preferably, at least a part of the inner peripheral edge of the wear plate comprises a profiled portion extending around an inner profile of the first end of the flexible cover member.

Preferably, at least a part of the inner peripheral edge of the wear plate comprises a portion extending within the flexible cover member to a second end of the flexible cover member.

The invention will now be described by example only with reference to the following drawings, in which:
Figure 1 shows a perspective view of a known compression roll housing showing elements of the compression roll housing;
Figure 2 shows a perspective view of a compression roll housing according to a first embodiment of the invention;
Figure 3 shows a perspective view of part of a processing drive system for compression rollers in the compression roll housing;
Figure 4 shows a detailed view of the compression roll housing of Figure 2 prior to completion of the compression roll housing;
Figure 5 shows a side view of a compression roll housing according a second embodiment of the invention;
Figure 6 shows a sectional view of a first aspect of an assembly suitable for securing the flexible cover in position; and
Figure 7 shows a sectional view of a second aspect of an assembly suitable for securing the flexible cover in position.

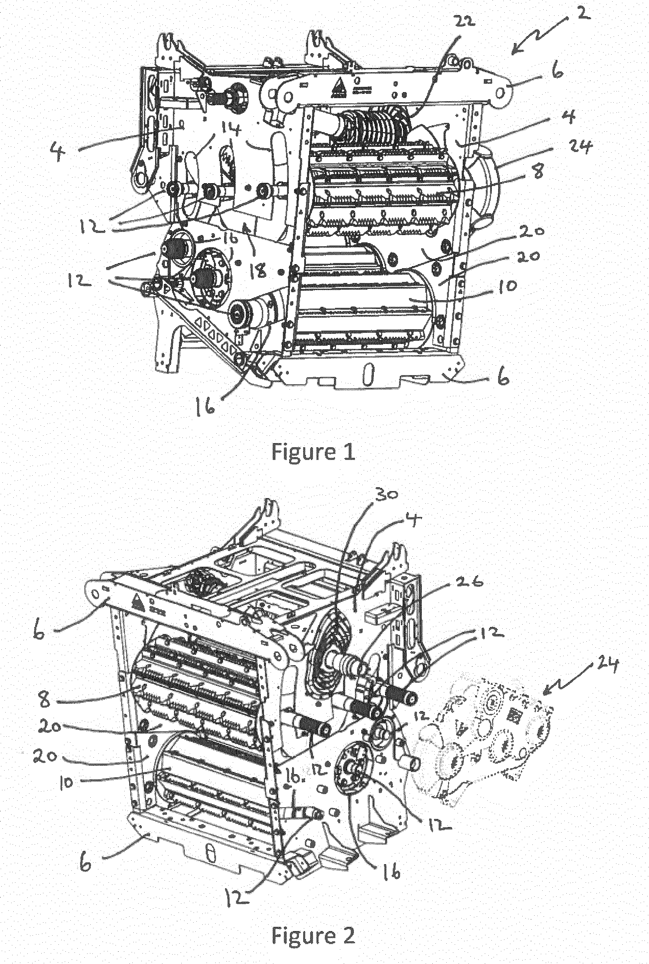

Figure 1 shows a perspective views of a known compression roll housing 2 for use in an agricultural machine, such as a forage harvester. The view shows the housing 2 looking into the housing from a front end towards a rear end. The housing 2 may be attached to a forage harvester (not shown) by suitable attachment assemblies.

A front attachment assembly may be attached to the front of the housing, to allow cut crop to be fed to the compression roll housing 2. The rear of the compression roll housing 2 may be attached to a rear part of machine housing a knife drum, such that once the crop has been compressed in the compression roll housing it can be fed to the knife drum to be chopped by the knife drum.

The compression roll housing 2 comprises two opposing side wall panels 4 and upper and lower front panels 6. A front end of the compression roll housing 2 is open and can be connected to a front attachment so that harvested material can be fed from the cutter into the compression roll housing 2. A rear end of the compression roll housing 2 is open for attachment to a further part of the machine where the compressed crop is cut or chopped. In the illustrated embodiment, the compression roll housing 2 houses three pairs of compression rollers. Each pair of compression rollers has an upper roller 8 and a lower roller 10. Each of the compression rollers 8,10 comprises a compression drum mounted on a roller shaft 12. Each of the side wall panels 4 has three elongated apertures 14 for receiving the roller shafts 12 of the upper rollers 8 and lower apertures 16 for receiving the roller shafts 12 of the lower rollers 10. The elongated apertures 14 are substantially vertical and gently curved. The elongated apertures 14 allow the roller shafts 12 of each of the upper rollers 8 to be raised or lowered within the compression roll housing 2. Each of the wall side panels 4 of the housing is also provided with a horizontal aperture 18 which extends across the compression roll housing 2 under the elongated apertures 14. The horizontal aperture 18 enables the upper rollers 8 to be assembled through the front end of the compression roll housing 2 which is desirable for assembly reasons.

In alternative embodiments other numbers of pairs of compression rollers, for example two pairs of compression rollers, may be provided with a corresponding number of elongated apertures 14 extending from the horizontal aperture 18 and a corresponding number of lower apertures 16 in the side wall panels 4.

Inside the roll housing 2, wear plates 20 reinforce the side wall panels 4 of the roll housing 2, especially around the elongated apertures 14 and protect the inside of the housing from damage from the processed crop. The wear plates 20 are simple to replace when worn.

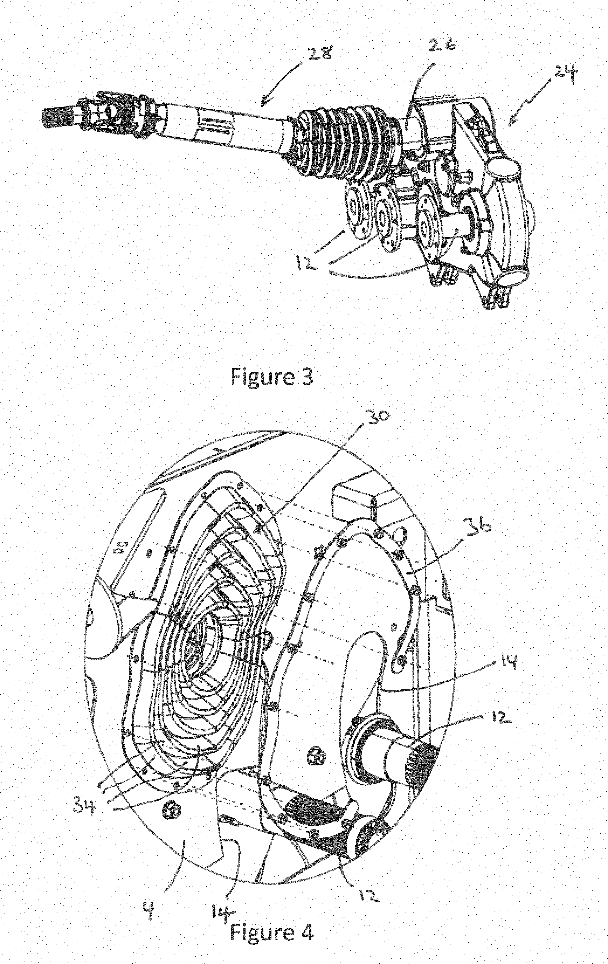

As best seen with Figures 1 to 3, the roller shafts 12 (which are provided with a ring flange for connection with the associated compression drum) are drivingly connected to a transmission 24 which connects the roller shafts 12 of the compression rollers to an input shaft 26 of a cardan driveline 28. The input shaft 26 also extends through one of the side wall panels 4 and is adapted to move together with the roller shafts 12 of each of the upper compression rollers 8 when raised or lowered within the compression roll housing 2. In view of this, one of the side wall panels 4 is provided with a further aperture 22.

The further aperture 22 is provided with a flexible cover 30 to seal the further aperture 22 to prevent any processed crop in the compression roll housing 2 from escaping through the further aperture 22. The flexible cover allows movement of the input shaft 26 within the further aperture 22 whilst providing a good seal across the further aperture 22 and around the input shaft 26. Provision of a good seal in this area has until now been a problem. The flexible cover 30 is attached to the further aperture 22 by means of a mounting ring 36. In this way, the input shaft 26 is fitted within the further aperture 22 so that the input shaft can be moved in a generally vertical direction along a longitudinal axis of the further aperture and movement of the input shaft is not restricted by the flexible cover.

The flexible cover 30 is provided with an aperture 32. Generally, the flexible cover 30 comprises a tubular member in which a first end may be secured to a side wall panel 4 of the compression roll housing 2 and the aperture 32 is provided at a second end.

The aperture 32 is fitted around a free end of the input shaft 26. The flexible cover 30 thus allows movement within the elongated aperture of the input shaft 26 received in the further aperture 22.

Between the first and second ends, the flexible cover 30 comprises a plurality of segments 34. More preferably the plurality of segments 34 are folded with respect to one another. This has as an advantage that the tubular member may extend concertina like as required as the input shaft 26 moves within the further aperture 22. In a preferred embodiment, the plurality of segments 34 are concentrically located with respect to the aperture 32. Alternatively, or additionally, the plurality of segments 34 may also be located concentrically with respect to the first end of the flexible cover 30.

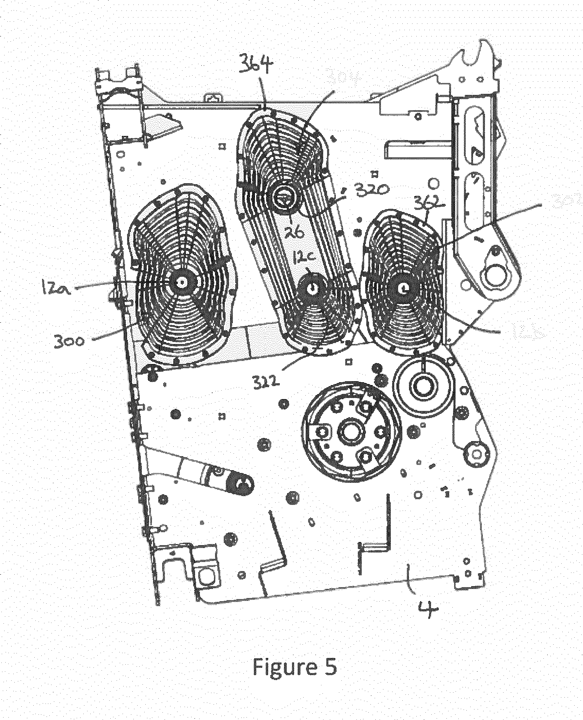

A second embodiment of the cover is shown in Figure 5. Like reference numerals are used to refer to like parts. A front roller shaft 12a and a rear roller shaft 12b are each provided with a flexible cover 300, 302. In addition, the mid roller shaft 12c and the input shaft 26 are provided with a common flexible cover 304. The mid roller shaft 12c and input shaft 26 move with a constant relative distance. The common flexible cover 304 is provided with two apertures, a first aperture 320 adapted to fit around the transmission input shaft 26 and a second aperture 322 adapted to fit around the mid roller shaft 12c.

Each of the covers 300, 302, 304 are fixed to side wall panels 4 by respective mounting plates 360,362,364.

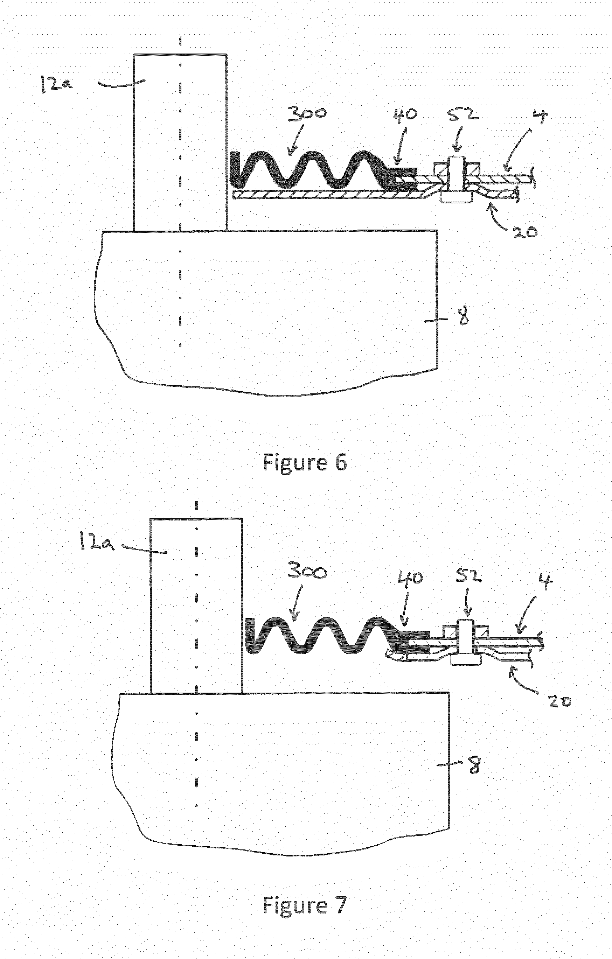

Figures 6 and 7 illustrate alternative fixing arrangements suitable for different regions of the flexible covers 30,300,302,304 used in the present invention. In Figures 6 and 7 only flexible cover 300 and front roller shaft 12a of Figure 5 are depicted, but it will readily be understood that the fixing arrangements are suitable for use for fixing any of the flexible covers disclosed herein. Further while attachment of the cover 300 to the side plate is shown only to one side of the front roller shaft 12 for clarity of illustration, it will be understood that the cover extends fully around the roller shaft. In each of these arrangements, the wear plate 36 is used.

The flexible cover 300 is secured in place by use of a U-shaped profile 40 formed around a peripheral edge of the aperture 32. The interior of the U-shaped profile 40 is inserted onto a peripheral edge of the wall panel aperture 22 to enclose the peripheral edge of the wall panel aperture 22. The flexible cover 300 is clamped between the side wall panel 4 and the wear plate 36. The wear plate 36 may be provided with a depression or series of depressions to ensure that the peripheral edge of the flexible cover 300 is not excessively deformed but instead held with the correct force. A plurality of openings are provided in the depression or series of depressions 50 to allow use of suitable fasteners 52 to secure the wear plate 36 to the side wall panel 4. Conveniently threaded fasteners such as those shown in Figures 6 and 7 may be used for this purpose.

The size and shape of the depressions are such that when the wear plate 36 is secured to the side wall panel 4 the distance between wear plate 36 and the side wall panel 4 is such as to hold a limb of the U-shaped profile in compression without damaging the limb.

In Figure 6, a free edge of the wear plate 36 extends within the flexible cover 300 to a region close to the roller shaft 12a to protect the inside of the flexible cover 300 from impact by the processed crop. This design may be used in the horizontal orientation with reference to Figure 5 as the roller shaft moves along the further aperture 22 and perpendicular to the drawing plane of Figure 6.

In Figure 7, the free edge of the wear plate 36 does not substantially extend within the flexible cover. This design may be used in the vertical orientation with reference to Figure 5 as the shaft moves along the elongated aperture in the drawing plane of Figure 7 from left to right and vice versa. This is necessary to enable vertical movement of the roller shaft 12a. In addition to the fasteners described in described in relation to Figure 6, the free edge of the wear plate 36 is provided with an at least partly circumferential leg 52 in order to support the attachment of the flexible cover 300 in this region. The circumferential leg 52 may be formed in any suitable manner, such as by deep drawing or pressing.

The circumferential leg 52 matches an adjacent inner contour of the flexible cover 300. The circumferential leg 52 serves to prevent movement of the cover 300 away from the periphery of the aperture 22 caused for example by the processed crop impacting the edge of the cover 300 and pushing the peripheral edge of the aperture 32 of the cover 300 away from the peripheral edge of the aperture 22 in the side wall panel 4.

From reading the present disclosure, other modifications will be apparent to persons skilled in the art. Such modifications may involve other features which are already known in the field of forage harvesters and component parts therefore and which may be used instead of or in addition to features already described herein.

## Claims

1. A compression roll housing for an agricultural machine, the housing comprising first and second side walls, a driveline extending between the side walls of the housing, one of the first and second walls having a side wall aperture, the driveline including an input shaft extending from within the roll housing through the side wall aperture to a transmission housing mounted externally of the side wall, said side wall aperture allowing for vertical movement of the input shaft within the side wall aperture, **characterised in that** the side wall aperture is provided with a flexible cover member having a cover aperture through which the input shaft extends.

2. A compression roll housing for an agricultural machine, the housing comprising first and second side walls, each side wall being provided with at least one elongated aperture for receiving a roller shaft of a compression roll, said side wall aperture allowing for vertical movement of the roller shaft within the side wall aperture, **characterised in that** the side wall aperture is provided with a flexible cover member having a cover aperture through which the roller shaft extends.

3. A compression roll housing according to claim 1 or claim 2, **characterised in that** the flexible cover member comprises a tubular member having a first end and a second end, in which the first end is secured to the housing and the cover aperture is provided at the second end.

4. A compression roll housing according to claim 3, **characterised in that** the first end of the flexible cover member is secured to the side wall of the housing having the side wall aperture.

5. A compression roll housing according to claim 3 or claim 4, **characterised in that** the tubular member comprises a plurality of segments.

6. A compression roll housing according to claim 5, **characterised in that** the plurality of segments are folded with respect to one another.

7. A compression roll housing according to claim 5 or claim 6, **characterised in that** the plurality of segments are concentrically located with respect to the cover aperture.

8. A compression roll housing according to any of claim 5 to claim 7, **characterised in that** the plurality of segments are located concentrically with respect to the first end of the flexible cover member.

9. A compression roll housing according any of claim 1 to claim 7, **characterised in that** the flexible cover member is located in position by a wear plate having an inner peripheral edge and an outer peripheral edge

10. A compression roll housing according to claim 9, **characterised in that** the wear plate is provided with a one or more depressions

11. A compression roll housing according to claim 10, **characterised in that** the or each depression is provided with one or more openings and that a peripheral portion of the side wall aperture is provided with a plurality of corresponding openings

12. A compression roll housing according to any of claim 9 to claim 11, **characterised in that** a periphery of the cover aperture is provided with a U-shaped profile.

13. A compression roll housing according to claim 12, **characterised in that** a limb of the U-shaped profile is located in position between a periphery of the side wall aperture and the inner peripheral edge of the wear plate.

14. A compression roll housing according to any one of claim 9 to claim 13, characterised that at least a part of the inner peripheral edge of the wear plate comprises a profiled portion extending around an inner profile of the first end of the flexible cover member.

15. A compression roll housing according to any one of claim 9 to claim 13, characterised that at least a part of the inner peripheral edge of the wear plate comprises a portion extending within the flexible cover member to a second end of the flexible cover member.
